# EUROPEAN PATENT APPLICATION

(11) **EP 4 015 971 A1**
(43) Date of publication of application: **22.06.2022**
(21) Application number: 21855342.8
(22) Date of filing: 23.07.2021
(51) Int. Cl.: F28D 15/04

(54) **FLAT PLATE HEAT PIPE AND MANUFACTURING METHOD THEREFOR, AND HEAT EXCHANGER**

(30) Priority: 10.08.2020 CN 202010797437
(71) Applicant: Shenzhen Fluentrop Technology Co., Ltd., Shenzhen, Guangdong 518055 (CN)
(72) Inventor: ZHU, Yonggang, Shenzhen, Guangdong 518055 (CN); LI, Yongyao, Shenzhen, Guangdong 518055 (CN); YANG, Huizhu, Shenzhen, Guangdong 518055 (CN); LV, Chuanwen, Shenzhen, Guangdong 518055 (CN)
(74) Representative: Diehl & Partner
(86) International application number: PCT/CN2021/108089
(87) International publication number: WO 2022/033289

(57) **Abstract**

A flat-plate heat pipe and a preparation method thereof, and a heat exchanger are provided. The flat-plate heat pipe includes an upper shell (11) and a lower shell (12); the upper shell (11) and the lower shell (12) are assembled with each other to form a flat-plate shell (10) with a sealed cavity; the sealed cavity is filled with a phase change working medium; a capillary wick (20) is arranged in the flat-plate shell (10); and a surface of the capillary wick (20) has a micro-nano structure. By means of the arrangement of the above capillary wick having the micro-nano structure on the surface thereof, the flat-plate heat pipe has excellent heat conductivity and high resistance to gravity, and is flexible in use and arrangement.

## Description

### TECHNICAL FIELD

The present disclosure relates to the technical field of two-dimensional rapid heat conduction devices, in particular to a flat-plate heat pipe and a preparation method thereof, and a heat exchanger.

### BACKGROUND ART

With the increasing development of science and technology, technologies in many leading-edge fields have been popularized and improved. For example, the performance of 5G communication, big data, cloud computing, AI, and other new-generation information and communication technology (ICT) has improved rapidly; new energy vehicles are rapidly popularized, and their power and endurance performance are enhanced; and high-energy leading-edge equipment such as radars and laser instruments can be widely used. With the advancement of these technologies, the devices are characterized by high integration, high energy density, and the like. Therefore, there will inevitably be the problems of small and complicated heat dissipation space of the devices, small heat dissipation area, and high heat flux. It is difficult for traditional air-cooled and liquid-cooled heat dissipation methods to meet the heat dissipation requirements of high heat flux devices. The performance and reliability of these components generally decline sharply as the temperature rises, and the heat dissipation problem has become an important factor restricting further development of a series of scientific and technological fields.

The working principle of a heat pipe: in a vacuum state, after an evaporation section of the heat pipe is heated, liquid in the evaporation section is evaporated quickly. The vapor flows to a condensation section under the action of a pressure difference. After heat is released, the vapor is re-condensed into liquid again. The liquid returns to the evaporation section by virtue of the capillary absorption of a wick. The vapor gradually increases in the evaporation section to the maximum at the edge of the evaporation section, then gradually decreases, and reaches the minimum at an end part of the condensation section. The liquid is the other way around, which is the maximum in the condensing section and the minimum in the evaporation section. The radius of a meniscus formed by the surface tension of the evaporation section is the smallest due to the evaporation, and the capillary absorption of the wick is the highest. The radius of the meniscus formed by the surface tension of the condensation section due to the condensation is the largest, and the capillary absorption of the wick is the lowest.

A traditional heat pipe technology is based on phase change heat transfer of a fluid working medium. Its application solves the problems in one-dimensional high heat flux and heat dissipation. The working principle of a soaking plate is similar to that of the heat pipe, but is different from that of the traditional heat pipe. A flat-plate heat pipe (or a soaking plate) performs two-dimensional heat conduction, which can transfer a concentrated point heat source to a larger area and has a better heat transfer effect. However, most of capillary wicks in the current soaking plates are of a single structure, or several porous media are combined to be a capillary wick, the liquid absorption performance of which is weak, limiting the reflux speed of a phase change working fluid and restricting the heat transfer performance, and even a heat pipe based on the above capillary wick structure is extremely low in resistance to gravity, causing that they fail in inverse gravity and cannot efficiently transfer heat. In order to solve the problem of low liquid absorption performance of a single capillary wick, the patent application No. CN101848629A discloses a soaking plate with a composite capillary structure of foamed metal and copper powder. Although this capillary wick can increase a capillary force on a working medium, the porosity of the capillary wick is greatly reduced due to the filling of the copper powder; the osmotic resistance to flowing of the working medium dramatically increases; and the overall capillary liquid absorption performance is improved to a limited extent, so the heat transfer efficiency is restrained.

### SUMMARY

The present disclosure aims to at least solve one of the technical problems in the existing art. In view of this, the present disclosure provides a flat-plate heat pipe and a preparation method thereof, and a heat exchanger.

The technical solution adopted by the present disclosure is as follows.

A first aspect of the present disclosure provides a flat-plate heat pipe. A flat-plate heat pipe includes an upper shell and a lower shell; the upper shell and the lower shell are assembled with each other to form a flat-plate shell with a sealed cavity. The sealed cavity is filled with a phase change working medium; a capillary wick is arranged in the flat-plate shell; and a surface of the capillary wick has a first micro-nano structure.

The flat-plate heat pipe of the present disclosure at least has the following beneficial effects. The surface of the capillary wick in the flat-plate heat pipe has the first micro-nano structure, which can enhance the capillary drive effect on the phase change working medium, improve the liquid absorption capacity of the capillary wick, and improve the gas-liquid cycle efficiency. In addition, by means of the arrangement of the first micro-nano structure on the surface of the capillary wick, in a heat exchange section of the flat-plate heat pipe, phase change can be enhanced to a certain extent, and the phase change efficiency can be improved, thus improving the heat conductivity and the temperature uniformity of the flat-plate heat pipe. Furthermore, under the action of the above capillary wick, the flat-plate heat pipe is less affected by the gravity during use and has high resistance to gravity, and flexible in use and arrangement.

In some embodiments, the capillary wick includes a capillary wick structure layer and/or a capillary wick layer; the capillary wick structure layer is arranged on an inner wall of the flat-plate shell; the capillary wick layer is sandwiched between the upper shell and the lower shell; and a surface of the capillary wick structure layer and a surface of the capillary wick layer have the first micro-nano structure.

In some embodiments, the capillary wick includes the capillary wick layer, and an inner wall surface of the flat-plate shell has a second micro-nano structure.

In some embodiments, the flat-plate shell includes a heat exchange section; the heat exchange section includes an evaporation section and a condensation section; and the evaporation section and the condensation section are distributed in sequence along a heat transfer direction of the flat-plate heat pipe. In some embodiments, the capillary wick includes the capillary wick layer; the capillary wick layer is provided with elongated channels along a heat transfer direction of the flat-plate heat pipe; a width of each elongated channel gradually increases from the evaporation section to the condensation section of the flat-plate shell, and/or, a thickness of the capillary wick gradually increases from the evaporation section to the condensation section of the flat-plate shell.

In some embodiments, the flat-plate shell is a flexible flat-plate shell, and the capillary wick layer is sandwiched between the upper shell and the lower shell.

In some embodiments, the flat-plate shell is a rigid flat-plate shell, and shell supporting members are arranged between the upper shell and the lower shell.

In some embodiments, the capillary wick includes the capillary wick layer; capillary wick supporting members are further arranged in the flat-plate shell; and the capillary wick supporting members are used to press and fix the capillary wick layer to the inner wall surface of the flat-plate shell.

A second aspect of the present disclosure provides a flat-plate heat pipe, the flat-plate heat pipe includes an upper shell and a lower shell. The upper shell and the lower shell are assembled with each other to form a flat-plate shell with a sealed cavity; the sealed cavity is filled with a phase change working medium; a capillary wick is arranged in the flat-plate shell; and an inner surface of the flat-plate shell has a second micro-nano structure.

The flat-plate heat pipe of the present disclosure at least has the following beneficial effects. The inner surface of the flat-plate shell of the flat-plate heat pipe has the second micro-nano structure, which can achieve ultra-thinning of a gas-liquid phase interface to form a phase change enhanced surface and improve the phase change efficiency, thereby improving the heat conductivity and the uniformity of the flat-plate heat pipe.

In some embodiments, the capillary wick includes a capillary wick structure layer and/or a capillary wick layer; the capillary wick structure layer is arranged on an inner wall surface of the flat-plate shell; a surface of the capillary wick structure layer has the second micro-nano structure; and the capillary wick layer is sandwiched between the upper shell and the lower shell.

In some embodiments, the capillary wick includes the capillary wick layer, and a surface of the capillary wick layer has a first micro-nano structure.

The third aspect of the present disclosure provides a preparation method of the flat-plate heat pipe provided according to the first aspect of the present disclosure, including following steps:
S1, preparing the upper shell and the lower shell to cooperatively form the flat-plate shell;
S2, disposing the capillary wick in the flat-plate shell, and performing surface micro-nano treatment on the capillary wick to form the first micro-nano structure on the surface of the capillary wick; and
S3, hermetically connecting edges of the upper shell and the lower shell to form the flat-plate shell with the sealed cavity, then vacuumizing the sealed cavity, and filling the sealed cavity with the phase change working medium.

The preparation method of the flat-plate heat pipe of the present disclosure at least has the following beneficial effects. By means of disposing the capillary wick in the flat-plate shell and performing the surface micro-nano treatment on the capillary wick to form the first micro-nano structure on the surface of the capillary wick, the capillary drive effect on the working medium can be enhanced, the liquid absorption capacity of the capillary wick can be improved, thereby improving the gas-liquid cycle efficiency. In addition, by means of the arrangement of the first micro-nano structure on the surface of the capillary wick, in a heat exchange section of the flat-plate heat pipe, phase change can be enhanced, and the phase change efficiency can be improved, thus improving the heat conductivity and the temperature uniformity of the flat-plate heat pipe; and furthermore, the prepared flat-plate heat pipe has high resistance to gravity, and is flexible in use and arrangement.

In the step S2, the micro-nano treatment on the surface includes at least one of thermal oxidation treatment, electrochemical deposition, physical vapor deposition, femtosecond laser machining, and manual sputtering.

A fourth aspect of the present disclosure provides a preparation method of any flat-plate heat pipe provided according to the second aspect of the present disclosure, including the following steps:
S1, preparing the upper shell and the lower shell to cooperatively form the flat-plate shell;
S2, disposing the capillary wick in the flat-plate shell, and performing micro-nano treatment on the inner wall surface of the flat-plate shell to form the second micro-nano structure on the inner wall surface of the flat-plate shell; and
S3, hermetically connecting edges of the upper shell and the lower shell to form the flat-plate shell with a sealed cavity, then vacuumizing the sealed cavity, and filling the sealed cavity with a phase change working medium.

The preparation method of the flat-plate heat pipe of the present disclosure at least has the following beneficial effects. By means of performing the micro-nano treatment on the inner wall surface of the flat-plate shell to form the second micro-nano structure on the inner wall surface of the flat-plate shell, super thinning of a gas-liquid phase interface can be achieved so as to form a phase change enhanced surface and improve the phase change efficiency, thereby improving the heat conductivity and the uniformity of the flat-plate heat pipe.

According to a fifth aspect of the present disclosure, a heat exchanger is provided, including any flat-plate heat pipe provided in the first aspect or the second aspect of the present disclosure.

The heat exchanger of the embodiment of the present disclosure at least has the following beneficial effects. The heat exchanger has high heat transfer performance based on the beneficial effects of the above flat-plate heat pipe since it contains any flat-plate heat pipe provided in the first aspect or the second aspect of the present disclosure.

### BRIEF DESCRIPTION OF THE DRAWINGS

FIG. 1 is a schematic structural diagram of a flat-plate heat pipe according to one embodiment of the present disclosure;
FIG. 2 is a scanning electron microscope (SEM) graph of a capillary wick layer in the flat-plate heat pipe shown in FIG. 1;
FIG. 3 is a partially schematic sectional diagram of an upper shell of a flat-plate heat pipe along a direction perpendicular to a long axis of the flat-plate heat pipe, according to another embodiment of the present disclosure;
FIG. 4 is a schematic diagram showing a micro-nano structure on an inner wall surface of an upper shell of a flat-plate heat pipe according to another embodiment of the present disclosure;
FIG. 5 is a schematic structural diagram of a capillary wick layer in a flat-plate heat pipe according to another embodiment of the present disclosure;
FIG. 6 is a schematic structural diagram of a capillary wick layer in a flat-plate heat pipe according to another embodiment of the present disclosure;
FIG. 7 is a schematic structural diagram of a capillary wick layer in a flat-plate heat pipe according to another embodiment of the present disclosure;
FIG. 8 is a schematic sectional diagram along A-A in FIG. 7; and
FIG. 9 shows test results of liquid absorption performance of different capillary wicks.

### DETAILED DESCRIPTION OF THE EMBODIMENTS

The concept and generated technical effects of the present disclosure will be clearly and completely described in conjunction with the embodiments to fully understand the objectives, features, and effects of the present disclosure. Apparently, the described embodiments are only a part of the embodiments of the present disclosure, rather than all the embodiments. Based on the embodiments of the present disclosure, other embodiments obtained by those skilled in the art without creative efforts shall all fall within the protection scope of the present disclosure.

In the description of the embodiments of the present disclosure, for orientation descriptions, orientations or positional relationships indicated by the terms "upper", "lower", "front", "rear", "left", "right", and the like are orientations or positional relationships as shown in the drawings, and are only for the purpose of facilitating and simplifying the description of the present disclosure instead of indicating or implying that devices or elements indicated must have particular orientations, and be constructed and operated in the particular orientations, so that these terms are not construed as limiting the present disclosure.

In the description of the embodiments of the present disclosure, if a certain feature is referred to being "disposed", "fixed", "connected", or "mounted" on another feature, it can be directly disposed, fixed, or connected to another feature, or indirectly disposed, fixed, connected, or mounted on another feature. In the description of the embodiments of the present disclosure, if it refers to "several", it means more than one; if it refers to "multiple", it means two or more; if it refers to "greater than", "less than", "more than ", it should be understood as not including this number; and if it involves "above", "below", and "within", it should be understood as including this number. If it refers to "first", and "second", it should be understood that they are for the purpose of distinguishing the technical features, and cannot be understood as indicating or implying the relative importance or implicitly specifying the number of the indicated technical features or implicitly specifying the order of the indicated technical features.

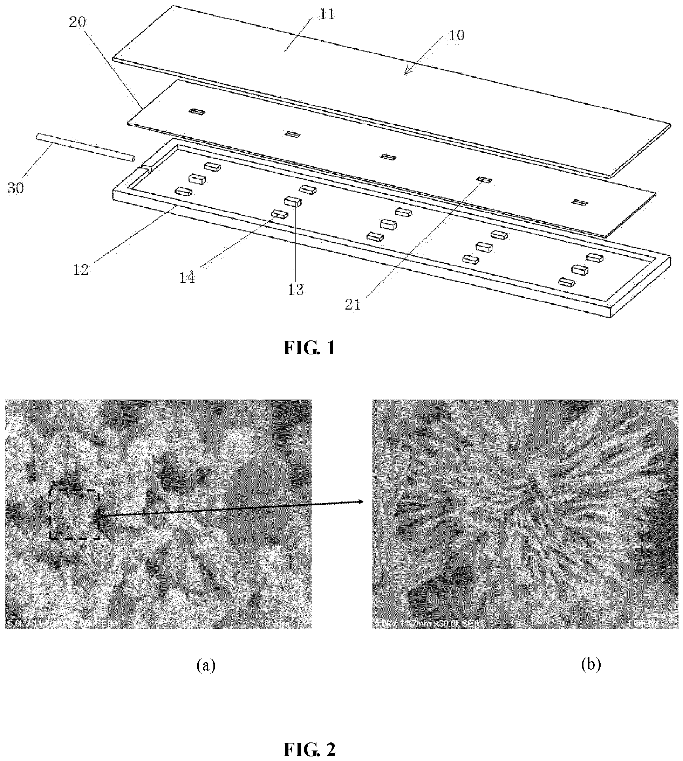

Referring to FIG. 1, FIG. 1 illustrates a schematic structural diagram of a flat-plate heat pipe according to one embodiment of the present disclosure. As shown in FIG. 1, the flat-plate heat pipe includes an upper shell 11 and a lower shell 12; the upper shell 11 and the lower shell 12 are assembled to form a flat-plate shell 10 with a sealed cavity. The sealed cavity is filled with a phase change working medium (not shown in the drawings). A capillary wick 20 is arranged in the flat-plate shell 10; and a surface of the capillary wick 20 has a first micro-nano structure. The capillary wick 20 covers the whole flat-plate heat pipe. In this embodiment, the flat-plate heat pipe further includes a liquid filling pipe 30 that is connected with the flat-plate shell 10 and communicates with the sealed cavity.

The flat-plate shell 10 may be designed into a rigid flat-plate shell and a flexible flat-plate shell using different materials, as desired by an application scenario. Specifically, the upper shell 11 and the lower shell 12 may be made of metal, including, but not limited to, copper, aluminum, aluminum alloy, steel, stainless steel, and the like, or may be made of non-metal, including, but not limited to, polymethyl methacrylate (PMMA), polycarbonate (PC), polyethylene (PE), polyethylene glycol terephthalate (PET), glass, and the like, or may be made of a composite material, including, but not limited to, a stacked composite material (such as an aluminum-plastic film and a composite thin film of plastic and metal foil), a doped composite material (such as a ceramic-based composite material and a resin-based composite material). The material of the upper shell 11 and the material of the lower shell 12 are selected as desired. For a high-power and high-temperature heat transfer scenario, a material with good heat conductivity is required (such as copper, aluminum, and stainless steel). Or, a corresponding ultra-thin flexible material is adopted as desired, to enable the flat-plate heat pipe to bend and deform, so that the flat-plate heat pipe can efficiently transfer heat on both a plane and a curved path, and its heat transfer path is more flexible. The flat-plate shell 10 may be designed into different shapes according to actual applications, such as rectangle, square, trapezoid, circle, cylindrical shell, and conical shell, or is designed into a specially-shaped structure according to requirements. A thickness of the flat-plate shell 10 may be 0.05 to 100 mm. In this embodiment, the flat-plate shell 10 is a rectangular rigid flat-plate shell. The upper shell 11 and the lower shell 12 are made of aluminum alloy. A heat transfer direction of the flat-plate heat pipe is a long-axis direction of the flat-plate shell 10.

The heat transfer direction of the flat-plate heat pipe may be designed according to actual requirements. For example, the flat-plate heat pipe may be designed into a circular flat-plate heat pipe, so the flat-plate shell is circular. A heat source may be arranged at a circle center of the circular flat-plate heat pipe. The heat is transferred in a direction from the circle center of the flat-plate heat pipe to the surrounding. Or, the flat-plate heat pipe may be designed to be a trapezoid flat-plate heat pipe, so the flat-plate shell is correspondingly trapezoid. A heat source may be arranged close to an upper bottom of the trapezoid flat-plate heat pipe. The heat is transferred in a direction from the upper bottom of the flat-plate heat pipe to a lower bottom. Or, the flat-plate heat pipe may be designed into a square flat-plate heat pipe, so the flat-plate shell is correspondingly square. A heat source may be arranged in a center of the square flat-plate heat pipe. The heat is transferred in a direction from the center of the square flat-plate heat pipe to the surrounding.

As shown in FIG. 1, in this embodiment, the flat-plate shell 10 is used as a protective casing, and the capillary wick 20 is arranged in the flat-plate shell 10. The capillary wick 20 is specifically a capillary wick layer sandwiched between the upper shell 11 and the lower shell 12. The capillary wick layer completely fills an inner plane of the whole flat-plate shell 10. In this embodiment, the capillary wick layer is made of foam metal material, specifically, foam copper. A surface of the capillary wick layer is subjected to thermal oxidization micro-nano treatment, so as to have a first micro-nano structure which has a super-hydrophilic characteristic. An electron scanning microscope is used to observe the capillary wick layer. Results obtained are shown in FIG. 2 where (a) is a SEM graph of the capillary wick layer in the flat-plate heat pipe of this embodiment, and (b) is a diagram illustrating a marked region in (a) that is magnified at 3000 times.

In other embodiments, the capillary wick may be made of other porous medium materials. For example, in low-temperature and normal-temperature application, any one of metal mesh, sintered powder and a 3D printing material may be used. In preparation of a high-temperature heat pipe, foam ceramic, porous ceramic, and the like may be adopted, and the first micro-nano structure is formed on the surface of the wick by means of the surface micro-nano treatment. The surface micro-nano treatment may specifically be thermal oxidation treatment, electrochemical deposition, physical vapor deposition, femtosecond laser machining, manual sputtering, and the like. By means of the above surface micro-nano treatment for the capillary wick layer, the first micro-nano structure is formed on the surface of the capillary wick layer so that the capillary wick layer has the super-hydrophilic characteristic, thus enhancing the capillary drive effect on the phase change working medium and improving the gas-liquid cycle efficiency.

In order to improve the stability of the heat pipe, in this embodiment, shell supporting members 13 are arranged between the upper shell 11 and the lower shell 12. The shell supporting members 13 are specifically fixed on an inner surface of the lower shell 11. The shell supporting members 13 are used to support the flat-plate shell 10 to prevent an inner cavity of the flat-plate heat pipe from collapsing. In addition, in order to fix the capillary wick layer, capillary wick supporting members 14 may be further arranged in the flat-plate shell 10 and are used to press and fix the capillary wick layer to an inner wall surface of the flat-plate shell 10. In this embodiment, the capillary wick supporting members 14 are also arranged on the inner surface of the lower shell 12. Specifically, capillary wick layer is pressed against the inner surface of the upper shell through the capillary wick supporting members 14. In addition, in order to ensure the supporting effect of the shell supporting members 13 and further ensure the mounting stability of the capillary wick layer, mounting through holes 21 used to mount the shell supporting members 13 may be formed in the capillary wick layer. The shell supporting members 13 abut against the upper shell 11 through the mounting through holes 21 of the capillary wick layer to realize supporting. The shell supporting members 13 and the capillary wick supporting members 14 may be designed to be cylindrical, rectangular columnar, prismatic, elliptical, and the like. If the flat-plate shell 10 is a flexible flat-plate shell, the above shell supporting members 13 and the capillary wick supporting members 14 may be omitted.

In other embodiments, the inner wall surface of the flat-plate shell 10 may also be directly provided with a capillary wick structure layer, and a surface of the capillary wick structure layer is subjected to surface micro-nano treatment (such as thermal oxidation treatment, electrochemical deposition, physical vapor deposition, femtosecond laser machining, and manual sputtering), so as to form, on the inner wall surface of the flat-plate shell 10, a capillary wick structure layer with a first micro-nano structure on the surface of the capillary wick structure layer, as the capillary wick 20. The capillary wick 20 may pass through the whole flat-plate heat pipe. Or, the capillary wick structure layer arranged on the inner wall surface of the flat-plate shell 10 and having a first micro-nano structure on the surface of the capillary wick structure layer, and the capillary wick layer sandwiched between the upper shell 11 and the lower shell 12 and having a first micro-nano structure on the surface of the capillary wick layer may be combined to form the capillary wick 20. The above capillary wick structure layer and the capillary wick layer are generally cooperatively connected and cover the whole flat-plate heat pipe.

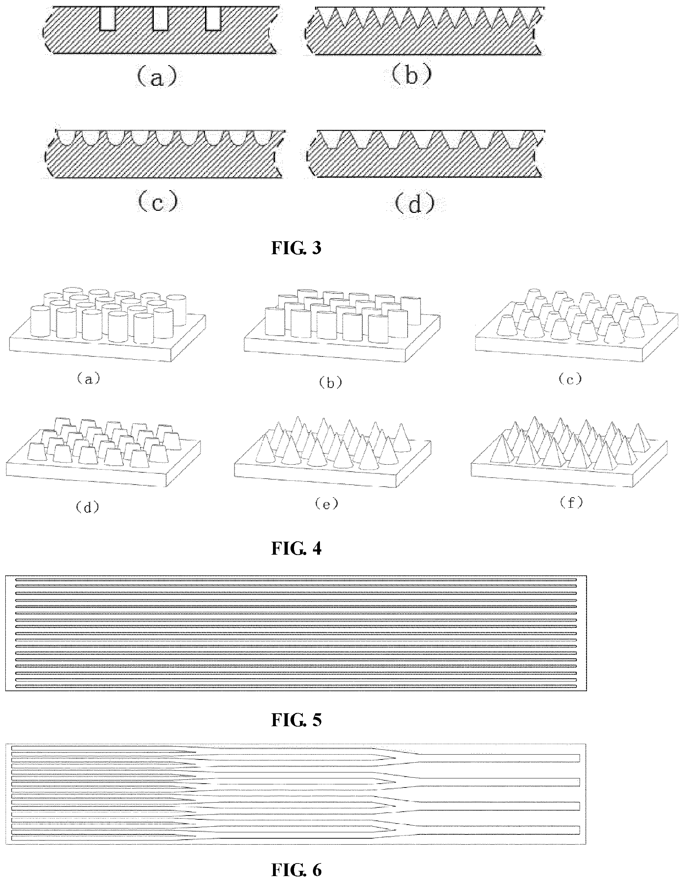

A basic structure of the capillary wick structure layer on the inner wall surface of the flat-plate shell 10 may adopt a basic structure similar to the above capillary wick layer, or may be designed into a micro-channel capillary structure. If the basic structure of the capillary wick structure layer on the inner wall surface of the flat-plate shell 10 adopts the micro-channel capillary structure, the micro-channel capillary structure extends and is arranged generally corresponding to the heat transfer direction of the flat-plate heat pipe. The micro-channel capillary structure on the inner wall surface of the flat-plate shell 10 may be designed into different shapes. For example, as shown in FIG. 3, FIG. 3 illustrates a partially schematic sectional diagram of the upper shell of the flat-plate heat pipe along a direction perpendicular to a long axis of the flat-plate heat pipe, according to another embodiment of the present disclosure. FIG. 3 specifically illustrates a micro-channel capillary structure having micro-channels in different shapes, where (a) in FIG. 3 illustrates square channels, (b) illustrates triangular channels, (c) illustrates circular channels, and (d) illustrates trapezoid channels. In addition, the micro-channel capillary structure on the inner wall surface of the flat-plate shell 10 may be uniformly disposed in parallel, corresponding to the heat transfer direction of the flat-plate heat pipe. Or, the width of the micro-channel capillary structure is non-uniformly distributed, corresponding to the heat transfer direction of the flat-plate heat pipe.

The surface of the basic structure of the above capillary wick structure layer is further subjected to the surface micro-nano treatment, so as to have the first micro-nano structure thereon. The way to perform the surface micro-nano treatment on the inner wall surface of the flat-plate shell 10 may be the same as or different from the way to perform the surface micro-nano treatment on the capillary wick layer. As shown in FIG. 4, in some embodiments, the surface micro-nano treatment may be performed on the inner wall surface of the flat-plate shell 10 so as to form first micro-nano structures in different shapes thereon, such as cylindrical array micro-nano structures as shown in FIG. 4(a), cylindroid array micro-nano structures as shown in FIG. 4(b), truncated cone array micro-nano structures as shown in FIG. 4(c), elliptical array micro-nano structure as shown in FIG. 4(d), conical array micro-nano structure as shown in FIG. 4(f), and pyramid array micro-nano structure as shown in FIG. 4(f). By means of disposing the capillary structure layer on the inner wall surface of the flat-plate shell 10 and performing the surface micro-nano treatment thereon, ultra-thinning of a gas-liquid phase change interface is achieved to form a phase change enhanced surface and improve the phase change efficiency.

In addition, in some embodiments, the capillary wick 20 may include the capillary wick layer sandwiched between the upper shell 11 and the lower shell 12 and having a first micro-nano structure on the surface of the capillary wick layer. A region, corresponding to the capillary wick layer, on the inner wall surface of the flat-plate shell 10 may also be subjected to the surface micro-nano treatment, so as to form a second micro-nano structure. For example, the capillary wick 20 is the capillary wick layer that covers the whole flat-plate heat pipe and has the first micro-nano structure on the surface thereof, and the inner wall surface of the flat-plate shell 10 may be subjected to the surface micro-nano treatment, so as to form the second micro-nano structure. By means of the first micro-nano structure on the capillary wick layer, the liquid absorption capability of the capillary wick can be improved, thereby improving the gas-liquid cycle efficiency. By means of the second micro-nano structure on the inner wall surface of the flat-plate shell 10, the phase change can be enhanced, and the phase change efficiency can be improved, thereby improving the heat conductivity and the temperature uniformity of the flat-plate heat pipe and improving the resistance to gravity of the flat-plate heat pipe.

In some embodiments, the capillary wick 20 in the flat-plate shell 10 may also adopt a conventional or special capillary wick, and the inner surface of the flat-plate shell 10 (which may be specifically the upper shell 11 and/or the lower shell 12) is subjected to the surface micro-nano treatment to form the second micro-nano structure on the surface thereof, that is, the inner surface of the flat-plate shell 10 has the second micro-nano structure. Therefore, the inner surface of the flat-plate shell 10 achieves the ultra-thinning of the gas-liquid phase interface, so as to form an enhanced surface for the phase change, thus improving the phase change efficiency and improving the heat conductivity and uniformity of the flat-plate heat pipe. At least the inner surface of a heat exchange section of the flat-plate shell is generally subjected to the surface micro-nano treatment, so as to enhance the phase change. The capillary wick 20 may specifically be the capillary wick structure layer, the capillary wick layer, or a combination of both the capillary wick structure layer and the capillary wick layer. The capillary wick structure layer is arranged on the inner wall surface of the flat-plate shell 10, and the surface of the capillary wick structure layer has the second micro-nano structure. The capillary wick layer is sandwiched between the upper shell 11 and the lower shell 12. The capillary wick structure layer having the second micro-nano structure can enhance the phase change, improve the liquid absorption capability of the capillary wick, and improve the gas-liquid cycle efficiency simultaneously. In some embodiments, the capillary wick includes the capillary wick layer. In order to improve the liquid absorption capability of the capillary wick, the surface of the capillary wick layer may also be subjected to the surface micro-nano treatment to form the first micro-nano structure, that is, the surface of the capillary wick layer has the first micro-nano structure.

In some embodiments, the capillary wick 20 includes the capillary wick layer sandwiched between the upper shell 11 and the lower shell 12. Elongated channels may be designed on the capillary wick layer along the heat transfer direction of the flat-plate heat pipe (as shown in FIG. 5, the heat transfer direction is a long-axis direction of the flat-plate shell). The capillary wick layer may be fitted to the flat-plate shell 10 so that space formed between the elongated channels on the capillary wick layer and the flat-plate shell 10 is used as the sealed cavity or one part of the sealed cavity. A channel ratio on the capillary wick layer is generally designed to be 1-100 according to the theory of mechanics of multi-phase fluid. By means of the above structural design, the capillary wick layer may be used as a supporting member between the upper shell 11 and the lower shell 12, and additional supporting members or reinforcement ribs are omitted, which can achieve the light and thin design required by devices.

Particularly for the problem that heat of a device with high-heat-flux needs to be exported in a limited space and a complex specially-shaped space in many application scenarios, it is desired that a heat pipe is ultra-thin, flexible, and deformable. The traditional soaking plate or heat pipe requires an additional vapor cavity space therein, so it needs to have certain mechanical strength to maintain the shape of the cavity. Therefore, reinforcement ribs need to be disposed inside the existing soaking plate or heat pipe. Furthermore, a stamped casing has a greater thickness and high rigidity, so it is hard for the existing soaking plate or heat pipe to be flexibly applied to the limited space and the complex specially-shaped space. This restrains the application of the flat-plate heat pipe in the field of heat dissipation of a highly integrated and complex specially-shaped device.

For the above special application scenarios with the limited space and the complex space, in some embodiments of the present disclosure, the flat-plate heat pipe can be designed into an ultra-thin flexible flat-plate heat pipe. Specifically, the flexible flat-plate shell can be used as a casing, and the capillary wick 20 includes a flexible capillary wick layer sandwiched between the upper shell 11 and the lower shell 12. Furthermore, in combination with a graphical design machining method, the elongated channels are formed in the capillary wick layer along the long-axis direction of the flat-plate shell 10, and spatial channels (including a space formed by cooperation of the elongated channels on the capillary wick layer and the shell) between the upper shell 11 and the lower shell 12 serves as a closed cavity, so an additional space height does not need to be increased in a thickness direction. With support from the capillary wick layer, there is no need to additionally dispose shell supporting members or reinforcement ribs. Moreover, the vapor flowing resistance can be reduced, and the circulation limit is avoided. Meanwhile, the capillary wick layer has good flexibility, so that an ultra-thin flexible flat-plate heat pipe can be prepared, which can be in close contact with a device and is used flexibly. The application range of the ultra-thin flexible flat-plate heat pipe is enlarged, and the ultra-thin flexible flat-plate heat pipe is suitable for being applied to heat dissipation of devices in highly integrated high-power complex systems.

In some embodiments, the flat-plate shell 10 may include a heat exchange section. The heat exchange section includes an evaporation section and a condensation section; and the evaporation section and the condensation section are distributed in sequence along the heat transfer direction of the flat-plate heat pipe. In addition, in some embodiments, the flat-plate shell 10 may also be designed to include a heat exchange section and a heat insulation section. The heat exchange section includes an evaporation section and a condensation section; and the evaporation section, the heat insulation section, and the condensation section are distributed in sequence along the heat transfer direction of the flat-plate heat pipe. The capillary wick structure layer with the micro-nano structure on the surface thereof may be provided on the inner wall surface of the heat exchange section of the flat-plate shell 10, and the capillary wick layer with the micro-nano structure on the surface thereof can be arranged in the heat insulation section of the flat-plate shell. The capillary wick structure layer and the capillary wick layer are connected, so as to cooperatively serve as the capillary wick 20 of the flat-plate heat pipe, thus forming a gas-liquid cycle system. By means of disposing, on the inner wall surface of the heat exchange section, the capillary wick structure layer with the micro-nano structure on the surface of the capillary wick structure layer, ultra-thinning of the gas-liquid phase change interface can be achieved, the phase change enhanced surface can be formed, thereby improving the phase change efficiency and having high liquid absorption capability. Furthermore, by means of disposing the capillary wick layer with the micro-nano structure on the surface of the capillary wick layer, in the heat insulation section, due to the existence of the surface micro-nano structure, the capillary wick layer has the super-hydrophilic characteristic, so that the capillary wick layer greatly enhances the capillary drive effect on the phase change working medium when the osmotic resistance thereof is less changed, and the gas-liquid cycle efficiency is significantly improved. Therefore, the heat conductivity and the temperature uniformity are also significantly improved therewith. Under the action of the above capillary wick 20, the flat-plate heat pipe is less affected by the gravity during use.

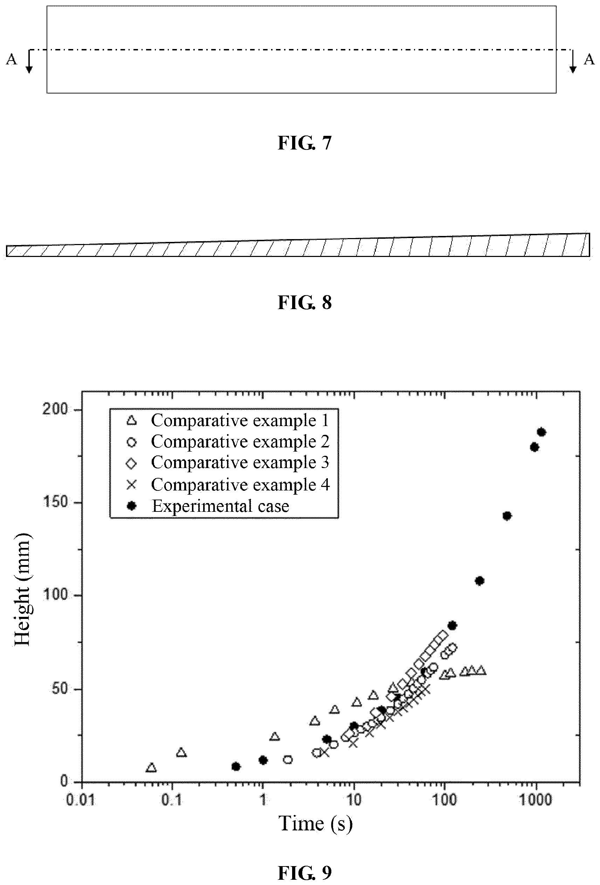

The shape of the capillary wick 20 can be designed differently according to different application scenarios. Specifically, the capillary wick 20 can be designed to have the same thickness, or designed to have unequal thicknesses (as shown in FIG. 7 and FIG. 8). The shape of the capillary wick 20 can be specifically designed to gradually thicken from the evaporation section to the condensation section of the flat-plate shell 10 according to application needs, that is, the thickness of the capillary wick gradually increases from the evaporation section to the condensation section of the flat-plate shell 10, and the cross section of the capillary wick 20 in the long-axis direction of the flat-plate shell 10 continuously increases. An outer surface of the capillary wick 20 and the inner wall surface of the upper shell 11 of the flat-plate shell 10 form a certain angle, such as 0.5 to 5 degrees. Under extreme conditions, the angle can exceed this range. When the heat pipe works, the evaporation section generally has the largest vapor volume and smallest liquid volume, while the condensation section has the smallest vapor volume and largest liquid volume. However, due to the influence of mutual effect between the surface tension and the gas-liquid interface, the gas-liquid interface of the evaporation section is sunken in the surface of the capillary wick 20 and forms an extremely small contact angle, which causes a highest capillary absorption force of the capillary wick 20; and the gas-liquid of the condensation section is spread on the surface of the capillary wick 20 and forms a larger contact angle, which causes a lowest capillary absorption force of the capillary wick 20. By means of the above structural design of the capillary wick 20, a thin capillary wick structure is used in a region of the evaporation section that contains a little liquid and has a high capillary force, and a thick capillary wick structure is used in a region of the condensation section that contains much liquid and has a low capillary force, which ensure reflow of the liquid and unblock vapor runners, thereby improving the capillary extreme power of the heat pipe.

In addition, as shown in FIG. 5, in some embodiments, the widths of the elongated channels on the capillary wick layer can also be set to be equal along a gas-liquid cycle direction (or the long-axis direction of the flat-plate shell 10). Or, as shown in FIG. 6, according to actual situation, the widths of the elongated channels are designed to be unequal. Specifically, the width of the elongated channel can be designed to gradually increase from the evaporation section to the condensation section of the flat-plate shell 10 to further improve the heat transfer efficiency of the heat pipe. For example, for a circular parallel heat pipe with the heat transfer direction from its center to the surrounding, if the capillary wick layer is correspondingly circular, the elongated channel on the capillary wick layer can be designed to gradually enlarge from the center of the capillary wick layer to the surrounding. Or, for a trapezoid parallel heat pipe with the heat transfer direction from an upper bottom to a lower bottom of the trapezoid parallel heat pipe, if the capillary wick layer is correspondingly trapezoid, the elongated channel on the capillary wick layer can be designed to gradually enlarge from the upper bottom to the lower bottom of the capillary wick layer.

The phase change working medium in the sealed cavity of the flat-plate shell 10 may be selected according to different application scenarios of the flat-plate heat pipe. For example, a low-temperature phase change working medium can be selected, including, but not limited to, helium, ammonia, nitrogen, pentane, Freon-21 (CHCI2F), Freon-11 (CCI3F), and Freon-113 (CCI2F.CCIF2), etc.; or , a normal-temperature phase change working medium can be selected, including, but not limited to, degassed deionized water, acetone, methanol, heptane, ethanol, or methanol, etc.; or, a high-temperature phase change working medium can be selected, including, but not limited to, potassium, sylvite, lithium, mercury, cesium, etc. A ratio of the volume of the phase change working medium injected into the sealed cavity of the flat-plate shell 10 to the volume of the sealed cavity may be set according to an actual design requirement, and is generally 5%-80%.

The surface of the capillary wick 20 in the above flat-plate heat pipe has the micro-nano structure, which can enhance the capillary drive effect on the phase change working medium, improve the liquid absorption capacity of the capillary wick 20, and improve the gas-liquid cycle efficiency. By means of the arrangement of the micro-nano structure on the surface of the capillary wick 20, in the heat exchange section of the flat-plate heat pipe, phase change can be enhanced, and the phase change efficiency can be improved, thus improving the heat conductivity and the temperature uniformity of the flat-plate heat pipe. Furthermore, under the action of the above capillary wick 20 having the micro-nano structure on the surface thereof, the flat-plate heat pipe is less affected by the gravity during use and has high resistance to gravity. According to infrared measurement, when the heating power of the flat-plate heat pipe of this embodiment is 100 W, the maximum temperature difference is less than 1 °C, and the temperature uniformity is excellent. Its effective heat conductivity is 6.67×105 W/(m·K), which is 1755 times that of copper. Its thermal conductivity is excellent. Furthermore, when the flat-plate heat pipe is placed horizontally and is vertically placed in the gravity direction, the difference between the thermal conductivity performances of the effective heat transfer coefficients is extremely low. When the flat-plate heat pipe is placed against the gravity, the heat transfer capability of the flat-plate heat pipe is slightly lower than that of the flat-plate heat pipe placed in the gravity direction, but its thermal conductivity is still excellent, indicating that the flat-plate heat pipe can run against the gravity, which makes its use and arrangement very flexible; and the flat-plate heat pipe is easy to machine and low in cost.

The present disclosure further provides a preparation method for the above flat-plate heat pipe, which may include the following steps:
S1. an upper shell 11 and a lower shell 12 are prepared to cooperatively form a flat-plate shell 10. For a rigid flat-plate shell, shell supporting members 13 and/or capillary wick supporting members 14 may be arranged on the lower shell 12, then, an organic cleaning solution (isopropanol or acetone) is used for cleaning and degreasing; and diluted hydrochloric acid is used to clean the surface of the shell to remove an oxide layer. For a flexible flat-plate shell, the above supporting members may be omitted.
S2, a capillary wick is arranged in the flat-plate shell 10, and surface micro-nano treatment is performed on the capillary wick to form a first micro-nano structure on the surface of the capillary wick. Specifically, a capillary wick structure base layer is arranged on an inner wall surface of the upper shell 11 and/or the lower shell 12, and the surface of the capillary wick structure base layer is subjected to the surface micro-nano treatment to form the capillary wick structure layer having the first micro-nano structure on the surface thereof; and/or, a capillary wick base layer is prepared from a porous medium material; the organic cleaning solution such as the isopropanol or acetone may be used for cleaning and degreasing; the diluted hydrochloric acid is then used to clean the surface of the capillary wick base layer to remove the oxide layer; the capillary wick base layer is subjected to the surface micro-nano treatment to form a capillary wick layer having the first micro-nano structure on the surface thereof; and the capillary wick layer is sandwiched between the upper shell 11 and the lower shell 12. In addition, in the case that the capillary wick 20 includes the capillary wick layer, a region, corresponding to the capillary wick layer, on the inner wall surface of the flat-plate shell may be subjected to the surface micro-nano treatment, so as to form a second micro-nano structure to enhance the phase change.
   Or, the capillary wick is arranged in the flat-plate shell 10, and an inner surface of the flat-plate shell 10 is subjected to the surface micro-nano treatment to form a second micro-nano structure on the surface of flat-plate shell 10. The capillary wick 20 may be the above capillary wick or a conventional capillary wick. Furthermore, at least the inner surface of the heat exchange section of the flat-plate shell 10 is generally subjected to the surface micro-nano treatment.
S3, edges of the upper shell 11 and the lower shell 12 are hermetically connected to form the flat-plate shell with a sealed cavity, and the sealed cavity is then vacuumized and filled with the phase change working medium. In particular, the hermetical connection may be specifically welding. A vacuum degree of the sealed cavity is generally 10-5-104 Pa. A ratio of the volume of the filled phase change working medium to the volume of the sealed cavity is generally 5%-80%.

In the preparation method, the capillary wick is arranged in the flat-plate shell, the surface micro-nano treatment is performed on the capillary wick to enable the surface of the capillary wick 20 to have the first micro-nano structure, which can enhance the capillary drive effect on the working medium and improve the liquid absorption capacity of the capillary wick, thereby increasing the gas-liquid cycle efficiency. In addition, by means of the arrangement of the first micro-nano structure on the surface of the capillary wick, in the heat exchange section of the flat-plate heat pipe, phase change can be enhanced, and the phase change efficiency can be improved, thus improving the heat conductivity and the temperature uniformity of the flat-plate heat pipe; and the prepared flat-plate heat pipe has high resistance to gravity, and is flexible in use and arrangement. If the surface micro-nano treatment is performed on the inner surface of the flat-plate shell to enable the inner surface of the flat-plate shell to have the second micro-nano structure, the phase change can also be enhanced, and the phase change efficiency can be improved.

The inventor separately performed capillary wick liquid absorption performance tests on the capillary wick used by the flat-plate heat pipe shown in FIG. 1 in the present disclosure and different capillary wicks used in the existing flat-plate heat pipes. The capillary wick used in the flat-plate heat pipe shown in FIG. 1 of the present disclosure is used as an experimental case where foam copper modified by a super-hydrophilic micro-nano structure by a surface oxidization process is used as the capillary wick layer; the capillary wick of Comparative example 1 is a foam nickel capillary wick layer; the capillary wicks in Comparative example 2 and Comparative example 4 are capillary wick layers having parallel and uniformly disposed square micro-channel capillary structures and having porous particles sintered in micro channels; and the capillary wick of Comparative example 3 is a capillary wick layer that is of a foam shape formed by sintering copper particles. The liquid absorption performance of the above capillary wicks is tested separately, and results obtained are as shown in FIG. 9. It can be known from FIG. 9 that in the present disclosure, the capillary wick layer used in the above flat-plate heat pipe is subjected to the surface micro-nano treatment to enable the surface to have the first micro-nano structure, so that the liquid absorption height is obviously increased, which is 2-3 times that of the capillary wicks of the existing comparative examples.

The above flat-plate heat pipe may be further applied to preparation of a heat exchanger. Therefore, the present disclosure further discloses a heat exchanger including any one of the above flat-plate heat pipes. In addition, in order to improve the heat exchange efficiency, a partial region or an entire surface of the flat-plate shell of the flat-plate heat pipe may be in coupling connection with a heat exchange enhancement component (such as a fin, a water-cooling block, and a radiation enhancement coating layer) according to application needs, so that the heat exchanger can be applied to various heat dissipation or heating situations, including, but not limited to, fast preheating of base station chips, computer central processing units (CPU), automotive power battery and fast chargers, and automotive power battery and power modules, efficient heat exchange of power generation devices, high-heat-flux heat dissipation of laser and radar, and the like.

## Claims

1. A flat-plate heat pipe, wherein the flat-plate heat pipe comprises an upper shell and a lower shell; the upper shell and the lower shell are assembled with each other to form a flat-plate shell with a sealed cavity; the sealed cavity is filled with a phase change working medium; a capillary wick is arranged in the flat-plate shell; and a surface of the capillary wick has a first micro-nano structure.

2. The flat-plate heat pipe according to claim 1, wherein the capillary wick comprises a capillary wick structure layer and/or a capillary wick layer; the capillary wick structure layer is arranged on an inner wall of the flat-plate shell; the capillary wick layer is sandwiched between the upper shell and the lower shell; and a surface of the capillary wick structure layer and a surface of the capillary wick layer have the first micro-nano structure.

3. The flat-plate heat pipe according to claim 2, wherein the capillary wick comprises the capillary wick layer, and an inner wall surface of the flat-plate shell has a second micro-nano structure.

4. The flat-plate heat pipe according to claim 2, wherein the flat-plate shell comprises a heat exchange section; the heat exchange section comprises an evaporation section and a condensation section; and the evaporation section and the condensation section are distributed in sequence along a heat transfer direction of the flat-plate heat pipe.

5. The flat-plate heat pipe according to claim 4, wherein the capillary wick comprises the capillary wick layer; the capillary wick layer is provided with elongated channels along a heat transfer direction of the flat-plate heat pipe; a width of each elongated channel gradually increases from the evaporation section to the condensation section of the flat-plate shell, and/or, a thickness of the capillary wick gradually increases from the evaporation section to the condensation section of the flat-plate shell.

6. The flat-plate heat pipe according to any one of claims 1 to 5, wherein the flat-plate shell is a flexible flat-plate shell, and the capillary wick layer is sandwiched between the upper shell and the lower shell.

7. The flat-plate heat pipe according to any one of claims 1 to 5, wherein the flat-plate shell is a rigid flat-plate shell, and shell supporting members are arranged between the upper shell and the lower shell.

8. The flat-plate heat pipe according to claim 7, wherein the capillary wick comprises the capillary wick layer; capillary wick supporting members are further arranged in the flat-plate shell; and the capillary wick supporting members are used to press the capillary wick layer against the inner wall surface of the flat-plate shell.

9. A flat-plate heat pipe, wherein the flat-plate heat pipe comprises an upper shell and a lower shell; the upper shell and the lower shell are assembled with each other to form a flat-plate shell with a sealed cavity; the sealed cavity is filled with a phase change working medium; a capillary wick is arranged in the flat-plate shell; and an inner surface of the flat-plate shell has a second micro-nano structure.

10. The flat-plate heat pipe according to claim 9, wherein the capillary wick comprises a capillary wick structure layer and/or a capillary wick layer; the capillary wick structure layer is arranged on an inner wall surface of the flat-plate shell; a surface of the capillary wick structure layer has the second micro-nano structure; and the capillary wick layer is sandwiched between the upper shell and the lower shell.

11. The flat-plate heat pipe according to claim 10, wherein the capillary wick comprises the capillary wick layer, and a surface of the capillary wick layer has a first micro-nano structure.

12. A preparation method for the flat-plate heat pipe according to any one of claims 1 to 8, comprising following steps:
preparing the upper shell and the lower shell to cooperatively form the flat-plate shell;
disposing the capillary wick in the flat-plate shell, and performing surface micro-nano treatment on the capillary wick to form the first micro-nano structure on the surface of the capillary wick; and
hermetically connecting edges of the upper shell and the lower shell to form the flat-plate shell with the sealed cavity, then vacuumizing the sealed cavity, and filling the sealed cavity with the phase change working medium.

13. A preparation method for the flat-plate heat pipe according to any one of claims 9 to 11, comprising following steps:
preparing the upper shell and the lower shell to cooperatively form the flat-plate shell;
disposing the capillary wick in the flat-plate shell, and performing surface micro-nano treatment on the inner wall surface of the flat-plate shell to form the second micro-nano structure on the inner wall surface of the capillary wick; and
hermetically connecting edges of the upper shell and the lower shell to form the flat-plate shell with the sealed cavity, then vacuumizing the sealed cavity, and filling the sealed cavity with the phase change working medium.

14. A heat exchanger, comprising the flat-plate heat pipe according to any one of claims 1 to 8 or the flat-plate heat pipe according to any one of claims 9 to 11.
